# EUROPEAN PATENT APPLICATION

(11) **EP 2 625 964 A2**
(43) Date of publication of application: **14.08.2013**
(21) Application number: 13154306.8
(22) Date of filing: 07.02.2013
(51) Int. Cl.: A23G 9/08, A23G 9/30, F28F 13/00

(54) **Machine with an improved cooling system for the production of ice-cream in doses**

(30) Priority: 09.02.2012 IT MI20120179
(71) Applicant: Bravo, Francesco, 36075 Montecchio Maggiore (IT)
(72) Inventor: Bravo, Francesco, 36075 Montecchio Maggiore (IT)
(74) Representative: De Gregori, Antonella

(57) **Abstract**

A machine for the production of ice-cream in doses, of the type comprising a mixer (5) of the starting food preparation, a whisking machine (6) and a cooling system (17,25) of said whisking machine, a thermal bridge also being envisaged between said whisking machine (6) and said mixer (5), so as to cool the latter to a sufficiently low temperature for preventing bacterial proliferation in the food preparation residues present inside the same.

With respect to traditional machines for the production of ice-cream in doses, that of the invention offers the advantage of ensuring the best conditions of genuineness of the final food product, without the risk of bacterial contamination coming from the mixing chamber.

## Description

The present invention relates to a machine with an improved cooling system for the production of ice-cream in doses.

The field of the invention relates to machines used for the preparation of ice-cream. Machines of the type the invention refers to are those having a mixer of the starting preparation (normally in powder form) with a liquid (water or milk), in order to obtain a mixture which is subsequently and immediately sent, downstream of the mixing phase, into an appropriate cooled whisking machine, suitable for producing the blend from which the end-product is obtained.

The mixer is traditionally at room temperature. This, combined with the lengthy residence times of the ice-cream residues inside the mixer, can cause the proliferation of bacteria which, in subsequent processings, are transferred to the product to be consumed, with an obvious risk for the user's health.

A further drawback of the known art described above is represented by the necessity of bringing the whisking machine to its operating temperature (normally below -20°C) in the shortest time possible and with each use of the machine. This creates considerable thermal stress on the part of the respective cooling plant, with high energy demands and a high number of start-ups that can damage the electrical parts of the compressor.

The publication GB 875 608 A discloses an apparatus for the production of ice-cream, equipped with a whisking machine situated beneath a cooled basin without a blender and in which the food preparation is contained already in the liquid phase.

The main objective of the present invention relates to a new machine for the production of ice-cream which, with respect to traditional machines, is able to guarantee the best possible conditions of genuineness of the end-product, free of bacterial contaminations right from the mixing chamber.

A further objective of the invention is to provide a machine of the type specified above which, unlike the known machines, ensures the immediate cooling of the whisking machine at its operating temperature with each start-up of the machine, safely and without any excessive stress on the respective cooling plant.

These and other objectives are achieved with the machine of claim 1. The remaining claims indicate preferred embodiments of the invention.

With respect to traditional machines for the production of ice-cream in doses, that of the invention offers the advantage of ensuring the best conditions of genuineness of the final food product, without the risk of bacterial contamination deriving from the mixing chamber.

The invention also allows the whisking machine to be cooled very rapidly with each start-up of the machine, thus reducing the risk of damaging the electrical parts of the cooling plant due to excessive operating loads.

These and other objectives, advantages and features will appear more evident from the following description of a preferred embodiment of the machine of the invention described for illustrative and non-limiting purposes in the figures of the enclosed drawings.

In these:
- figure 1 illustrates a front view of the machine of the invention;

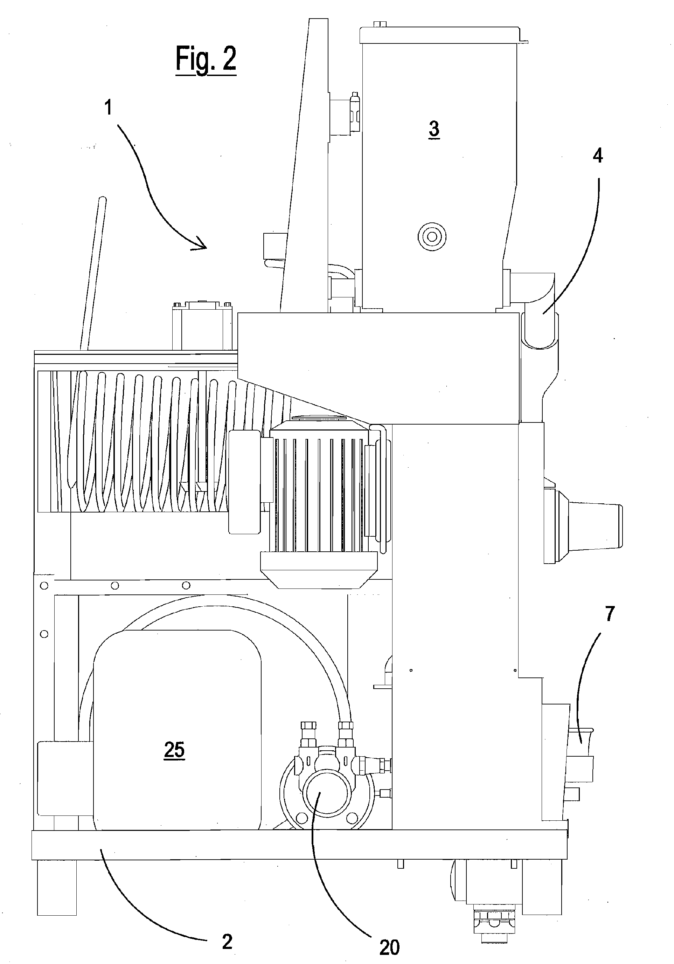

- figure 2 illustrates a side view of the machine of figure 1;
- figure 3 illustrates a side sectional view of the machine of the previous figures with a view of the mixing chamber and whisking machine; and
- figure 4 illustrates the detail of the cooling circuit of the whisking machine.

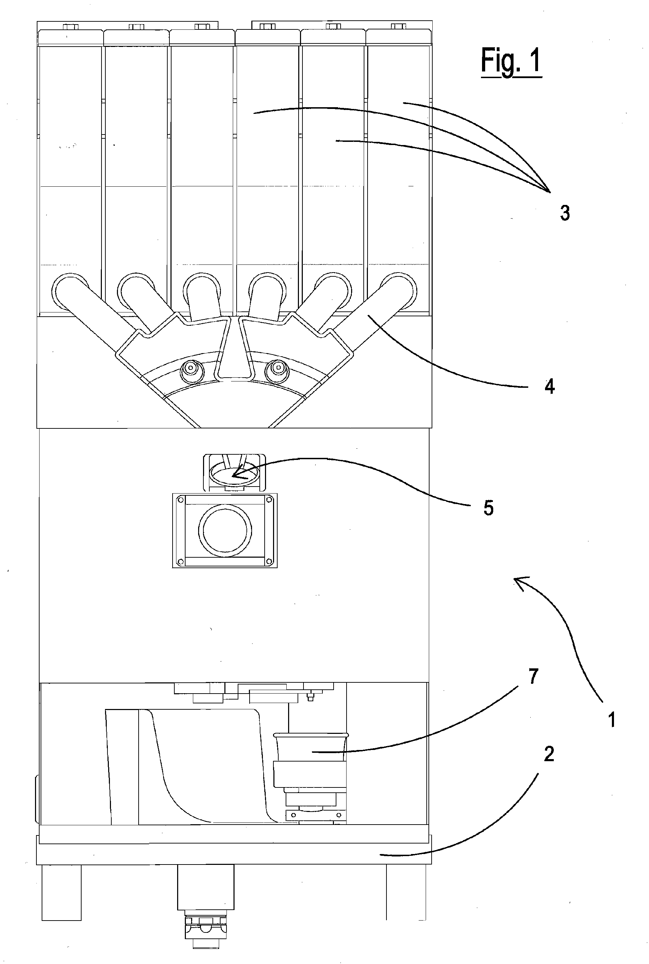

The machine of the invention, indicated as a whole with 1 in figure 1, comprises a supporting base 2 for a plurality of containers 3 of powder preparations having different flavours. A respective duct 4 of the preparation powder is associated with each container 3 for conveying it into a mixer 5. A food preparation mixture is thus obtained, which, after passage in the whisking machine 6 equipped with a corresponding mixer 26, allows the end-product to be obtained in the form of ice-cream, finally collected inside a suitable cup 7.

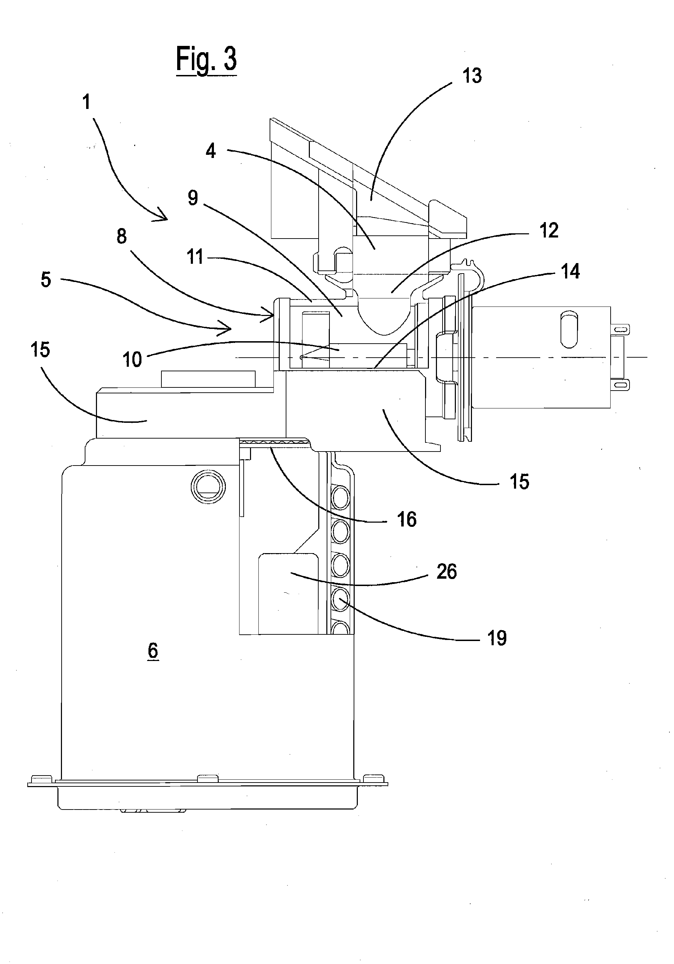

As is more clearly visible in figure 3, the mixer 5 is composed of a cylindrical body 8, inside which there is a mixing chamber 9 equipped with a respective blender 10. In correspondence with its upper wall 11, the cylindrical body 8 of the mixer 5 has a feeding hopper to the mixing chamber 9, through a corresponding opening 13, of the powder preparation coming from the above-mentioned containers 3, to which a jet of water or milk has been suitably added in the necessary quantities.

According to the invention, the lower wall 14 of the above-mentioned body 8 of the mixer 5, made of a thermally conductive material, is in direct contact with a plate 15, also made of a thermally conductive material, in turn in direct contact with the corresponding portion of the upper wall 16 of the whisking machine 6, again made of a thermally conductive material. Thanks to its arrangement, the above-mentioned plate 15 acts as a thermal bridge which allows the cooling to be transferred from the whisking machine 6 (normally lower than - 20 °C) to the mixer 5, maintaining the latter at this temperature. In this way, the ingredients are cooled together with any possible processing residues inside the mixing chamber 9, to a temperature which is sufficiently low as to prevent bacterial proliferation in the mixer 5.

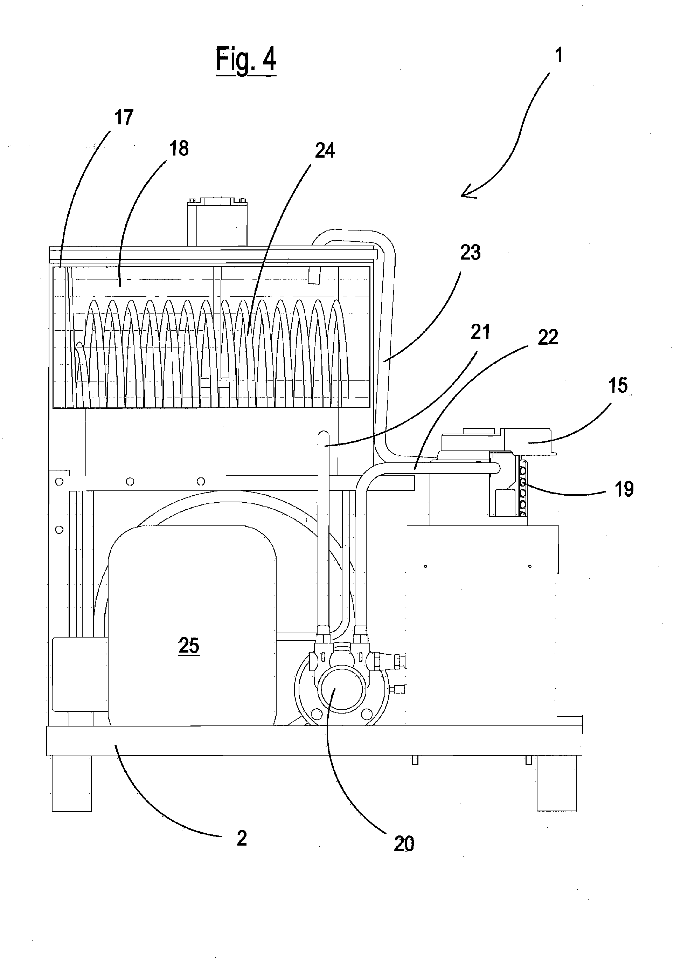

As illustrated in figure 4, the cooling system present on the machine of the invention comprises a containment basin 17 for a cooling liquid 18, in turn destined for being circulated inside the coil 19 of the whisking machine 6. For this purpose, there is a pump 20 which sucks the liquid 18 from the basin 17 through the duct 21 and sends it into the above-mentioned coil 19 of the whisking machine through a respective duct 22. A duct 23 finally sends the cooling liquid 18 back into the basin 17.

The cooling of this liquid 18 is obtained through a suitable cooling fluid (e.g. Freon) which circulates, by means of a compressor 25, in a respective coil 24, in turn housed inside the same basin 17 and immersed in the liquid 18. In this way, the above-mentioned basin 17 acts as a container for the cooling liquid 18, maintained by the coil 24 at its cooling temperature of the whisking machine 6.

Thanks to this feature, the machine of the invention makes the cooling liquid 18 immediately available, i.e. exactly when the cooling of the whisking machine is required, at the operating temperature of the latter and without any overloads on the compressor 25,

Modifications can be applied to the invention, as described above and illustrated in the enclosed drawings, for creating variants which, however, are included in the scope of the following claims.

In particular, the plate 15 can be directly substituted by the upper wall 16 of the whisking machine 6, or integrated with the latter. In the same way, the lower wall 14 of the mixer 5 can be structured so as to create a direct contact with the upper wall of the whisking machine 6. The desired heat transfer from the whisking machine to the mixer, in order to cool the latter and maintain it at the desired temperature, is, in fact, also maintained with these variants.

## Claims

1. A machine for the production of ice-cream in doses, of the type comprising a mixer (5) composed of a cylindrical body (8) in which there is a mixing chamber (9) equipped with a respective blender (10), said mixer (5) being suitable for the formation of the starting food preparation obtained by mixing a powder preparation, to which water or milk has been added in the necessary quantities, in the above mixing chamber (9), said machine also comprising a whisking machine (6) and a cooling system (17,25) of said whisking machine, **characterized in that** it also comprises a thermal bridge between the above-mentioned whisking machine (6) and said mixer (5), so as to cool and maintain the latter at a sufficiently low temperature for preventing bacterial proliferation in the food preparation residues present inside the same.

2. The machine according to claim 1, **characterized in that** said thermal bridge is obtained by direct contact between the upper wall (16), made of a thermally conductive material, of said whisking machine (6) and the lower wall (14) of the body (8) of the mixer (5), also made of a thermally conductive material.

3. The machine according to claim 1, **characterized in that** said thermal bridge consists of a plate (15) made of a thermally conductive material in direct contact, on one side with the upper wall (16) of said whisking machine (6), also made of a thermally conductive material, and, on the other side, with the lower wall (14) of the body (8) of the mixer (5), again made of a thermally conductive material.

4. The machine according to any of the claims from 1 to 3, **characterized in that** said cooling system also comprises a basin (17) for containing a cooling liquid (18) of the whisking machine (6), said liquid (18) being cooled in turn by a cooling fluid circulating by means of a compressor (25) in a respective coil (24), the latter in turn housed inside the same basin (17) and immersed in said cooling liquid (18).

5. The machine according to claim 4, **characterized in that** said cooling liquid (18) is fed, inside the coil (19) of the whisking machine (6), through a pump (20) and a respective suction pipe (21) from the basin (17), the same machine also comprising a duct (22) for conveying the liquid (18) to the coil (19) of the whisking machine (5) and a duct (23) for the return of the same cooling liquid (18) to the basin (17).
